# EUROPEAN PATENT APPLICATION

(11) **EP 3 520 660 A1**
(43) Date of publication of application: **07.08.2019**
(21) Application number: 18189277.9
(22) Date of filing: 16.08.2018
(51) Int. Cl.: A47J 37/06

(54) **WEATHER-RESISTANT ELECTRICAL CONNECTOR**

(30) Priority: 06.02.2018 US 201862626754 P; 19.06.2018 US 201816012593
(71) Applicant: Team International Group of America, Inc., Miami Gardens, FL 33169 (US)
(72) Inventor: Murad, David, Aventura, FL Florida 33180 (US); Chen, Risheng, ZhongShen, Guangdong (CN)
(74) Representative: Aldridge, Christopher Simon

(57) **Abstract**

A heating device cooperates with and is removable from an appliance. The appliance has electrical circuitry communicating with a pair of receivers. The heating device has a heating element in thermal communication with a cooking portion, and a pair of electrical posts and a pair of actuators protruding there-from. As the appliance receives the heating device, the actuators move covers of the receivers to allow the electrical sockets of the receivers to receive the posts to enable electrical communication between the circuitry and the heating element.

## Description

### RELATED APPLICATIONS:

This application claims priority to US Provisional Application No 62/626754, filed on 06-FEB-2018, the entire teachings of which are incorporated herein by reference.

### FIELD OF THE INVENTION:

The invention relates to food grilling. More specifically, the invention relates to electrical grilling appliances for surface cooking food and to the safety and longevity thereof.

### BACKGROUND:

The prior art includes electrical cooking appliances having removable and replaceable cooking surfaces. Those cooking surfaces often include an embedded electrical heating element, making the cooking surface not only a heatable surface for cooking, but also an integral component of the electrical circuitry. Enabling the end user to remove such a circuit component poses numerous challenges, the more obvious of which is preventing access to exposed live elements. Also, since such cooking appliances are prone to become greasy and dirty during cooking, end users have a tendency (even when warned there-against) to rinse the appliance at the tap. This poses the additional threat of wetting live parts if the user has forgotten to unplug the appliance, or wetting parts that will become live once the appliance is plugged back in.

There exists the need, and it is therefore an object of the invention, to provide an electrical cooking appliance which minimizes the end-user's ability to inadvertently touch live electrical parts. There exists the need, and it is therefore an object of the invention, to provide an electrical cooking appliance which minimizes the possibility of wetting live parts. There exists the need, and it is therefore an object of the invention, to provide an electrical cooking appliance having one or more removable and replaceable heating devices which are electrically connectable to the appliance through one or more connectors which minimize the end-user's ability to inadvertently touch live electrical parts. There exists the need, and it is therefore an object of the invention, to provide an electrical cooking appliance having one or more removable and replaceable heating devices which are electrically connectable to the appliance through one or more connectors which minimize the possibility of wetting live parts.

Further needs and object of the invention will become apparent upon a review of the following disclosure of an exemplary embodiment.

### SUMMARY OF THE INVENTION:

The invention may be embodied in or practiced using an electrical cooking appliance having one or more heating devices which are removable from the appliance for washing or for replacing with other devices for different cooking styles. The devices included embedded electrical heating elements and therefore form an integral component of the appliances electrical circuitry. The heating elements connect to the appliance through novel connectors which minimize the end-user's ability to inadvertently touch live electrical parts and minimize the possibility of wetting live parts.

The invention may be embodied in or practiced using, in combination, an appliance and a heating device for use in cooperation therewith and removable therefrom. The appliance may have electrical circuitry and a pair of electrical receivers, the receivers each in electrical communication with the circuitry and including an electrical socket and a movable cover. The heating device may include a cooking portion, a heating element in thermal communication with the cooking portion and in first electrical communication with a pair of electrical posts protruding from the heating device, and a pair of receiver actuators protruding from the heating device. The appliance may be adapted to receive the heating device. The receivers may be adapted to receive the posts as the appliance receives the heating device. The receiver actuators may move the covers to an open position as the receivers receive the posts to expose the electrical sockets and allow them to each receive one of the posts in a second electrical communication between the circuitry and the heating element to enable energization of the heating element to warm the cooking portion. Removal of the heating device from the appliance may enable the covers to move to a closed position wherein the sockets are covered thereby. The weight of the heating plate may cause the receiver actuators to move the covers to the open position and the covering of the sockets in the closed position may be waterproof.

The appliance may be a griddling appliance and the heating device may be a griddle plate. The appliance may be a grilling appliance and the heating device may be a grill. The appliance may be a frying appliance and the heating device may be a frying pan. The appliance may be a ribbed surface cooker and the heating device may be a ribbed surface-cooking plate. The appliance may be a stewing appliance and the heating device may be a lidded pot. The appliance may be a sautéing appliance and the heating device may be a sautéing pot.

The invention may also be embodied in or practiced using an electrical connector combination including an electrical receiver and an electrical post and an actuator. The electrical receiver may have an electrical socket and a cover movable from an closed position to an open position, the cover covering the socket in the closed position and exposing the electrical socket in the open position. The electrical post and an actuator may have a relatively fixed disposition and may be movable relative to the electrical receiver. The actuator may move the cover to the open position as the receiver receives the electrical post to enable electrical communication between the electrical post and the electrical socket. Removal of the electrical post from the electrical socket may allow the cover to move to the closed position wherein the socket is covered thereby. the covering of the socket in the closed position may be waterproof.

The connector may have a lever in communication with the cover, and the actuator may move the cover by moving the lever. The lever may include a pivot axle having an off-center cam. The connector may include a spring biasing the cover towards the closed position.

Further features and aspects of the invention are disclosed with more specificity in the Detailed Description and Drawings provided herein and showing exemplary embodiments of the invention.

### DETAILED DESCRIPTION OF THE DRAWINGS:

An exemplary embodiment of a countertop cooking appliance in accordance with or useful in practicing the invention are shown in the accompanying Drawings, of which;
Figure 1A is a perspective view of an exemplary electrical cooking appliance using exemplary connectors in accordance with a first embodiment;
Figure 1B is an exploded perspective view of the appliance of Fig. 1A;
Figure 2 is a perspective view of the female portion of one of the connectors of Fig. 1A;
Figure 3 is an exploded view of the connector of Fig. 2;
Figure 4 is a partial perspective view of two of the connectors of Fig. 2 in the appliance of Fig. 1A;
Figure 5 is a close-up perspective view of one of the connectors of Fig. 2 in the appliance of Fig. 1A;
Figure 6 is a close-up side view of one of the connectors of Fig. 2 in the appliance of Fig. 1A immediately prior to connection;
Figure 7 is a close-up side view of one of the connectors of Fig. 2 in the appliance of Fig. 1A during connection;
Figure 8 is a close-up top view of one of the connectors of Fig. 2;
Figure 9 is a close-up top view of one of the connectors of Fig. 2 in the appliance of Fig. 1A during connection;
Figure 10A is an exploded perspective view of an appliance according to a second embodiment;
Figure 10B is an exploded perspective view of an appliance according to a third embodiment;
Figure 10C is an exploded perspective view of an appliance according to a fourth embodiment;
Figure 10D is an exploded perspective view of an appliance according to a fifth embodiment;
Figure 10E is an exploded perspective view of an appliance according to a sixth embodiment; and
Figure 10F is an exploded perspective view of an appliance according to a seventh embodiment.

### DESCRIPTION OF AN EXEMPLARY EMBODIMENT:

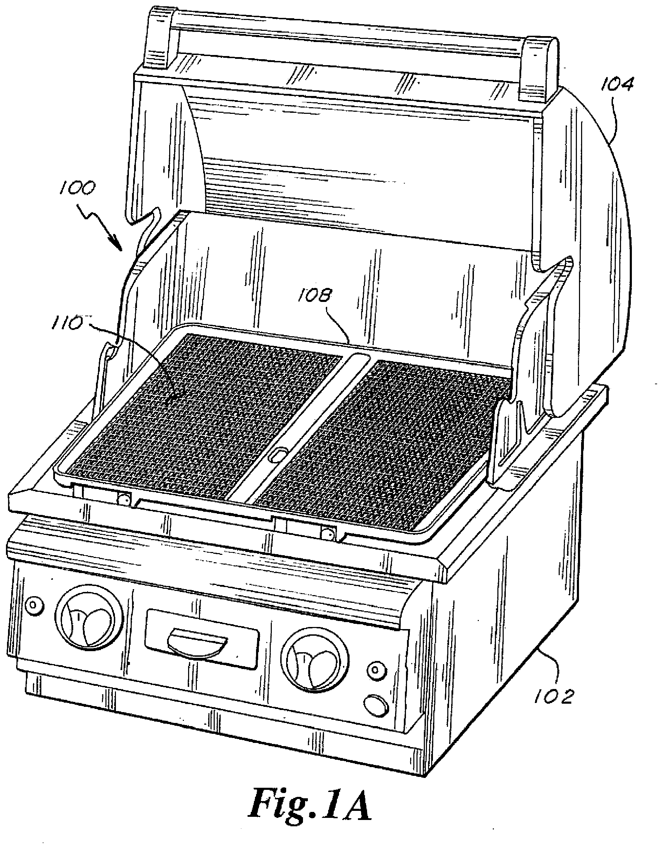

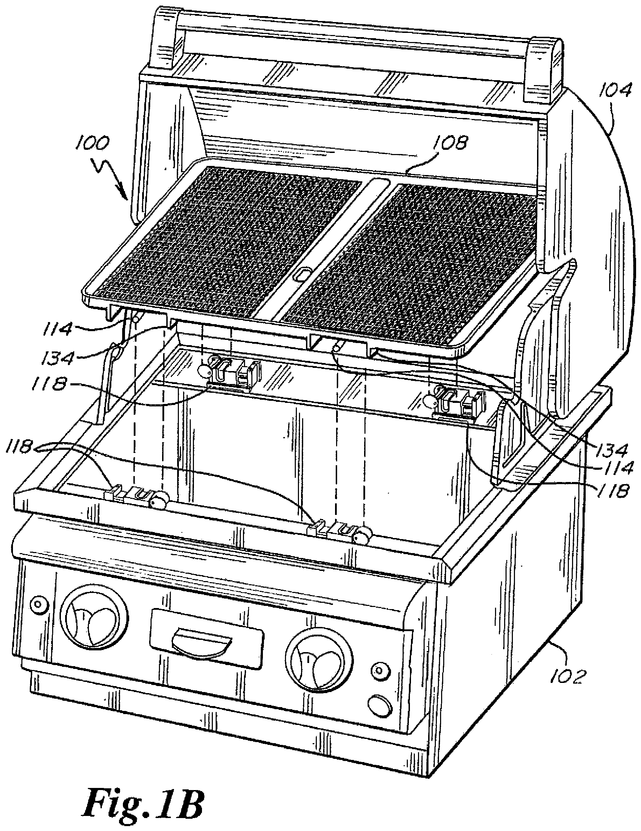

Referring to Figures 1A and 1B, an exemplary countertop cooking appliance 100 in accordance with or useful in practicing the invention is depicted in the accompanying drawings and comprises a base 102 and a lid 104, held together by a hinge located in the rear of the appliance. On the top of the base is a heating device 108 which supports the food to be cooked and which, when heated, transfers cooking heat to the food.

The heating device is both removable from the appliance for washing after use, or for swapping with different heating devices that may include features and contours for some other form of cooking, as explained below. The heating device is preferably made of cast aluminum and includes a top surface 110 adapted for supporting and interfacing with a food during cooking there-of, an insert-cast electrical heating element 112 embedded there-within, and four of electrical connection posts 114 protruding therefrom; two back posts from the back of the device and two front posts from the front of the device. The connection posts are electrically in series with the heating element and become connected to the appliance's circuitry when the heating device is installed as follows, to complete the heating circuit.

The appliance includes four electrical receivers 118, two front receivers at the front of the appliance and two rear receivers at the rear of the appliance. The receivers are each adapted to receive one of the posts of the heating device and together with the post form a connector.

The front connectors are electrically connected to the "hot" side of the appliance's circuity. This is a safety feature. The user may be inclined to remove the heating device by first grasping it at the front edge and lifting the front edge up out of the front receivers, then pulling the heating device from the rear receivers. Because the front receivers are on the live side of the circuit, the front posts become electrically dead as soon as they are lifted out of the front receivers. Alternatively (and non-preferably), if it was the rear connectors that were "live", the front posts would have remained live in such a scenario and would have been easy to accidentally touch during removal. Also alternatively, a safety switch could be included to sense the presence and removal of the heating device and deenergize the receivers when the heating plate is not properly positioned.

The heating device is symmetrical so that it fits and functions whether inserted front-to-back or rotated one hundred and eighty degrees and inserted back-to-front. The connectors and appliance are arranged and disposed to receive the device equally either way. So it should be understood that terms like "front post" refers to the post protruding towards the user at a given time, but if the device is turned around 180 degrees, that post would then become a "back post" at that time. The high-amperage rated connectors, including both the post of the heating device and the receiver of the appliance, are all identical to each other.

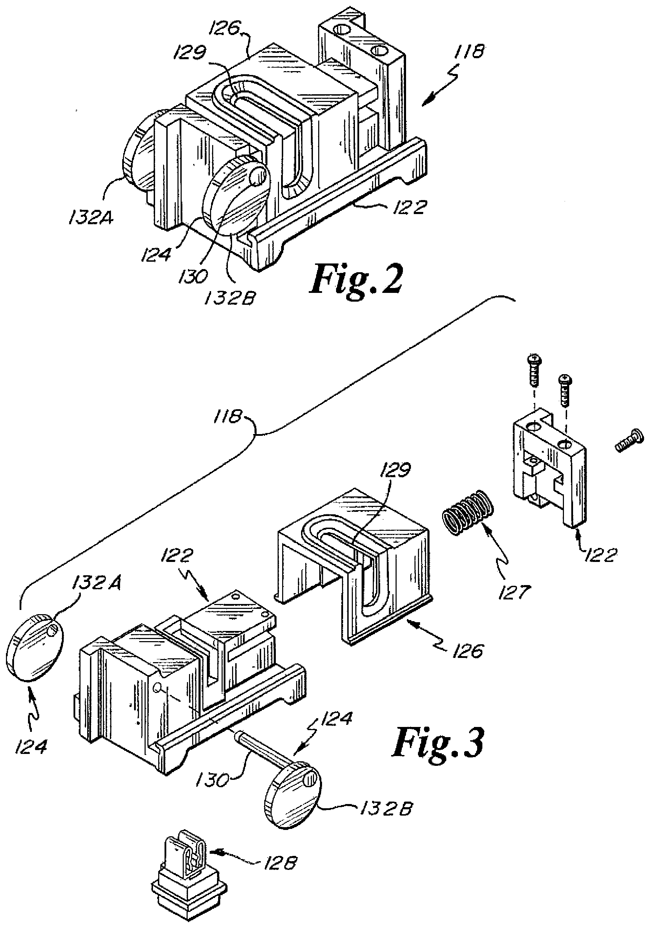

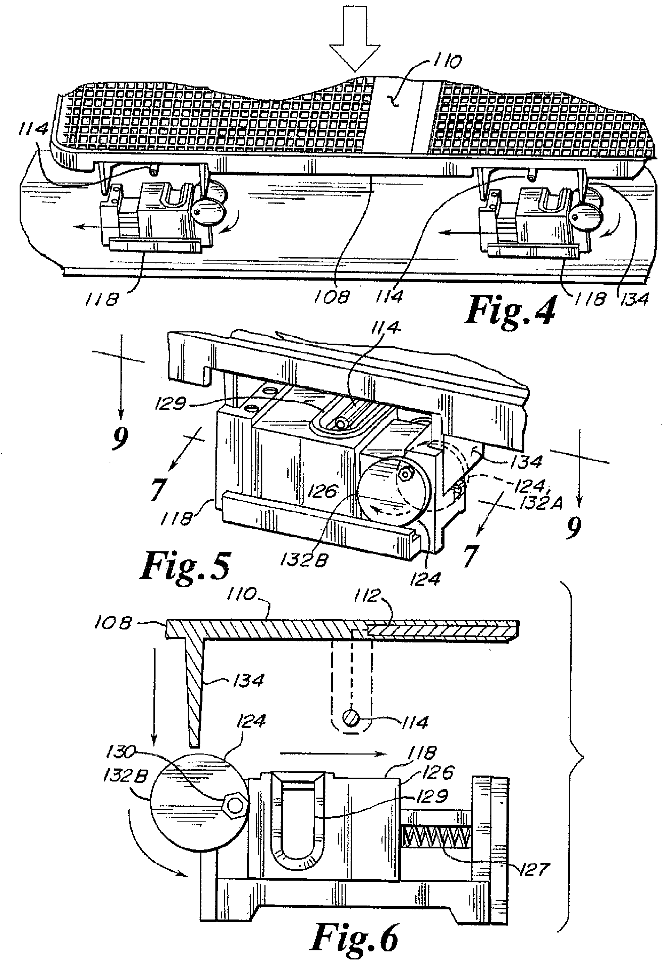

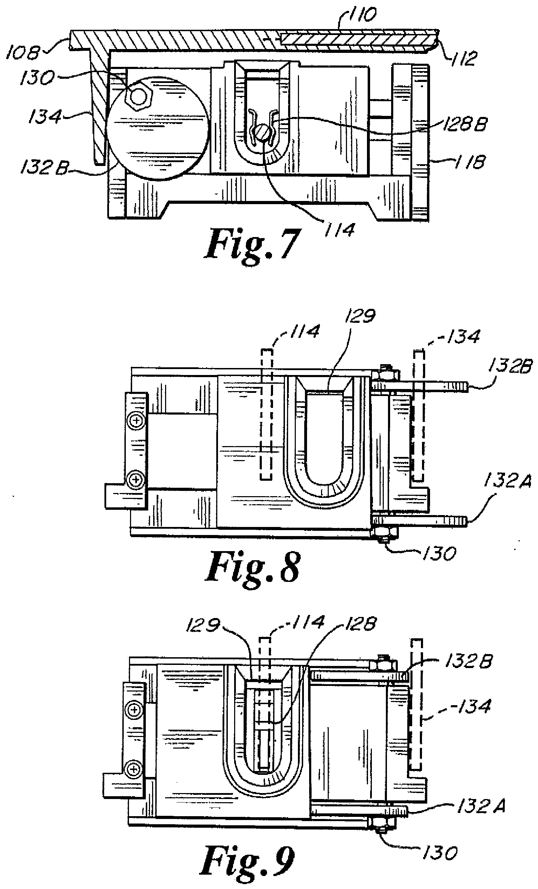

Referring next to Figs 2 through 9, each receiver is permanently and immovably affixed to the appliance. The receiver includes a body 122, a lever 124, a sliding cover 126, a spring 127, and an internal female electrical socket 128 that connects to the appliances circuitry. Slot 129 of the cover is aligned with the socket. The lever has a pivot axle 130 with identical off-center cams 132A and 132B at each end. The sliding cover intercedes between the slot and the socket when the receiver is in the normally closed state of Fig 2, but is moved to expose the socket through the slot when the receiver is in the open state of Fig. 7. The interface between the sliding cover and the slot is waterproof to prevent water from entering the otherwise enclosed cavity containing the socket. This protects the socket both when the connector is used in an outdoor appliance and when the appliance is washed. Waterproofing of a sufficient degree for these purposes is accomplished by the close-fitting dimensional relationship between the cover and the body. The spring biases the sliding cover relative to the body into the normally-closed configuration of Fig 2. Pivoting the lever as shown in Fig 6 forces the sliding cover against the spring's bias into the open configuration of Fig 7. Integrally-cast cam actuators 134 hang downwardly from the front and rear edges of the heating device adjacent each electrical connection post and are disposed to interact with the off-center cams as the device is being positioned into the appliance to rotate the lever, as best seen in Figs 5 through 7. The cams provide a mechanical advantage that allows the weight of the heating device to pivot them against the force of the biasing spring, so that no downward force is needed and connection is ensured by gravity. The mere weight of the heating plate guarantees that the connection will always be properly made.

The heating device may be, or may be part of a set that includes, one or more of; a flat contact-griddle, a ribbed griddle, a peripherally-walled frying pan, a lidded pot, etc. The heating device is removable for such things as cleaning, or for swapping one type of heating device into the appliance for another, or may be used with an integral or accessory handle or with oven mitts to use as a hot server. When used as such a serving device, another heating device may be inserted into the appliance in its place to be used for simultaneous cooking while serving.

It should be appreciated that when exposed, the electrical components of the receiver are covered and protected and the user is protected from them, but that during installation of the heating device, the receiver is caused by the heating device into an open state to allow electrical connection thereto. Were this not the case, then with the heating device removed those electrical components would likely become exposed and become a shock hazard, or could become candidates for damage by weather, grease, or such.

As previously explained and as show, the lever has identical off-center cams at each end of the pivot axle. This allows that the receiver may be used in other application where there is a left and a right receiver and the identical receiver may be used in either position. Less preferably, there could be distinct left and right versions of the receiver in such an arrangement, with the pivot axle having one cam at one end for the left version and one cam at the other end for the right version. Installing the heating device into the appliance causes the cam actuators to force rotate the lever as seen in Fig 6 to expose socket 128 through slot 129 and thereby allows the heating device's post to pass through the slot and engage the socket both physically and electrically.

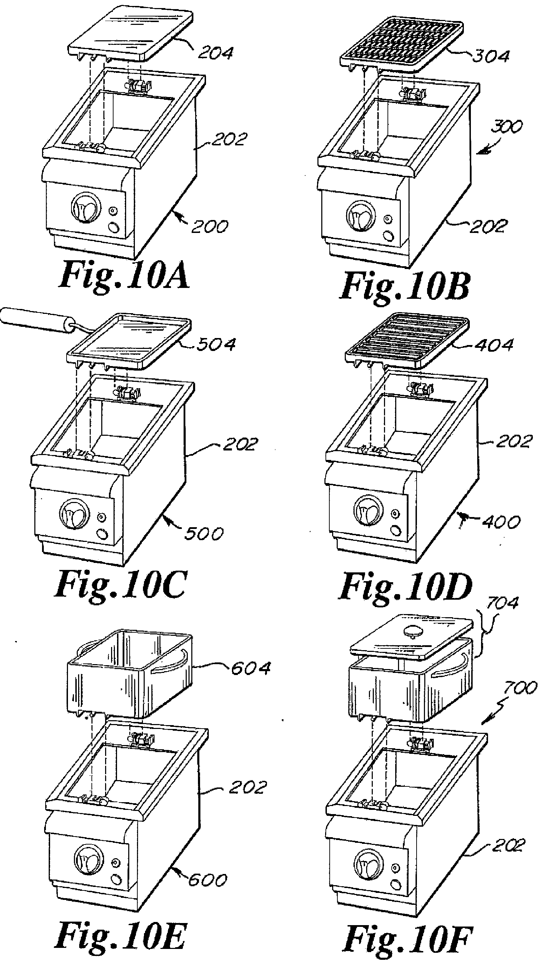

Figures 10A through 10F show various alternate embodiments employing alternative heating devices. It should be appreciated that these can each be distinct appliances or can represent an appliance having a variety of exchangeable heating devices according to the desired cooking purpose.
- In Fig 10A, gridding appliance 200 includes base 202 and griddle plate 204,
- In Fig 10B, grilling appliance 300 includes base 202 (the same base as used in Fig 10A) and grill 304,
- In Fig 10C, gridding appliance 400 includes base 202 and ribbed surface-cooking plate 404,
- In Fig 10D, gridding appliance 500 includes base 202 and frying pan 504,
- In Fig 10E, gridding appliance 600 includes base 202 and sautéing pot 604, and
- In Fig 10F, gridding appliance 700 includes base 202 and lidded pot 704.

While the invention has been shown and described with reference to specific exemplary embodiments, it should be understood by those skilled in the art that various changes in form and detail may be made without departing from the spirit and scope of the invention, and that the invention should therefore only be limited according to the following claims, including all equivalent interpretation to which they are entitled.

## Claims

1. An appliance and a heating device for use in cooperation therewith and removable therefrom, the appliance comprising electrical circuitry and a pair of electrical receivers, the receivers each in electrical communication with the circuitry and comprising an electrical socket and a movable cover; and
the heating device comprising;
a cooking portion;
a heating element in thermal communication with the cooking portion and in first electrical communication with a pair of electrical posts protruding from the heating device; and
a pair of receiver actuators protruding from the heating device;
wherein;
the appliance is adapted to receive the heating device;
the receivers are adapted to receive the posts as the appliance receives the heating device;
the receiver actuators move the covers to an open position as the receivers receive the posts to expose the electrical sockets and allow them to each receive one of the posts in a second electrical communication between the circuitry and the heating element to enable energization of the heating element to warm the cooking portion; and
removal of the heating device from the appliance enables the covers to move to a closed position wherein the sockets are covered thereby.

2. An appliance and heating device according to claim 1 wherein the weight of the heating plate causes the receiver actuators to move the covers to the open position, and wherein the covering of the sockets in the closed position is waterproof.

3. An appliance and heating device according to claim 1 or claim 2 wherein the appliance is a griddling appliance and the heating device comprises a griddle plate.

4. An appliance and heating device according to claim 1 or claim 2 wherein the appliance is a grilling appliance and the heating device comprises a grill.

5. An appliance and heating device according to claim 1 or claim 2 wherein the appliance is a frying appliance and the heating device comprises a frying pan.

6. An appliance and heating device according to claim 1 or claim 2 wherein the appliance is a ribbed surface cooker and the heating device comprises a ribbed surface-cooking plate.

7. An appliance and heating device according to claim 1 or claim 2 wherein the appliance is a stewing appliance and the heating device comprises a lidded pot.

8. An appliance and heating device according to claim 1 or claim 2 wherein the appliance is a sautéing appliance and the heating device comprises a sautéing pot.

9. An electrical connector combination comprising:
an electrical receiver comprising an electrical socket and a cover movable from a closed position to an open position, the cover covering the socket in the closed position and exposing the electrical socket in the open position; and
an electrical post and an actuator having a relatively fixed disposition and movable relative to the electrical receiver;
wherein;
actuator moves the cover to the open position as the receiver receives the electrical post to enable communication between the electrical post and the electrical socket; and
removal of the electrical post from the electrical socket allows the cover to move to the closed position wherein the socket is covered thereby.

10. An electrical connector according to claim 9 wherein the covering of the socket in the closed position is waterproof.

11. An electrical connector according to claim 10 further comprising a spring biasing the cover towards the closed position.

12. An electrical connection according claim 10 or claim 11 further comprising a lever in communication with the cover, and wherein the actuator moves the cover by moving the lever.

13. The connector of claim 12 wherein the lever comprises a cam

14. The connector of claim 12 wherein the lever comprises a pivot axle having a cam.

15. The connector of claim 13 or claim 14 wherein the cam is an off-center cam.
